# EUROPÄISCHE PATENTSCHRIFT

(11) **EP 0 418 660 B1**
(45) Veröffentlichungstag und Bekanntmachung des Hinweises auf die Patenterteilung: **23.03.1994**
(21) Anmeldenummer: 90117141.3
(22) Anmeldetag: 06.09.1990
(51) Int. Cl.: H01B 7/28, H01B 7/32, G01M 3/18, G02B 6/44

(54) **Nachrichtenkabel**
Communication cable
Câble de communication

(30) Priorität: 22.09.1989 DE 3931666
(43) Veröffentlichungstag der Anmeldung: 27.03.1991
(73) Patentinhaber: kabelmetal electro GmbH, 30002 Hannover (DE)
(72) Erfinder: Scholz, Siegfied, Dipl.-Ing., D-3012 Langenhagen 5 (DE)

(56) Entgegenhaltungen:
- DE-A- 1 055 067
- DE-A- 2 724 795
- FR-A- 2 168 310
- GB-A- 2 164 198
- US-A- 2 289 732

## Beschreibung

Die Erfindung betrifft ein Nachrichtenkabel mit die Kabelseele bildenden kunststoffisolierten Adern und/oder Lichtwellenleitern sowie einem Kabelmantel, wobei die Hohlräume in der Kabelseele durch eine die Ausbreitung von Wasser verhindernde Füllmasse wie z. B. Petrolat, über die gesamte Länge des Kabels ausgefüllt sind und zwischen Kabelseele und Kabelmantel ein Band aus einem für die Füllmasse undurchlässigen Material, wie z. B. ein Kunststoffband vorgesehen ist.

Mit der Verwendung immer höherer Frequenzen und neuer Übermittlungssysteme in der Fernsprechtechnik ist es erforderlich, die elektrischen Eigenschaften der Fernsprechkabel konstant zu halten. Das Eindringen von Feuchtigkeit oder Wasser in die Kabelseele ist eine der Ursachen, welche für die Änderung der elektrischen Eigenschaften verantwortlich ist.

Es sind Kabelmäntel entwickelt worden, welche die konventionellen, aus Blei oder anderen Metallen bestehenden Kabelmäntel durch gleichwertige oder verbesserte ersetzen. Solche Kabelmäntel bestehen üblicherweise aus einem Kunststoffmantel und einem unter diesem angeordneten, die Kabelseele umhüllenden Metallband. Bei diesen üblicherweise als Schichtenmantel bezeichneten Kabelmänteln besteht der Kunststoffmantel aus Polyethylen und das Metallband ist ein Aluminiumband, welches neben seiner Eigenschaft als elektrostatischer Schirm als Wasserdampfsperre wirkt (DE-A 25 14 569). In neuerer Zeit ist das Aluminiumband durch ein- oder beidseitig mit Copolymer beschichtetes Aluminiumband ersetzt worden.

Bei übermäßiger mechanischer Belastung oder unsachgemäßer Handhabung des Kabels während und nach der Verlegung können in dem Aluminiumband Schnitte, Risse oder Brüche auftreten, durch welche Wasserdampf oder Wasser eindringen kann. Im Falle von papierisolierten Adern wird ein Ausbreiten des Wassers in Längsrichtung durch ein Aufquellen der Papierisolierung behindert. Der Fehler kann durch die stark verminderte Isolation schnell erkannt und eingemessen werden. Bei neuerdings vermehrt eingesetzten kunststoffisolierten Adern - geschäumt oder ungeschäumt - versagt dieser Mechanismus. Das eingedrungene Wasser kann sich in den Zwickelräumen ungefüllter Kabel zwischen den Adern ungehindert ausbreiten. Nicht nur, daß sich dadurch die Übertragungseigenschaften des Kabels verschlechtern, das Wasser breitet sich bis zu den Verbindungsmuffen aus und kann dort Kurzschlüsse verursachen. Bis zum Entdecken und Lokalisieren der Feuchtigkeit über Prüfleiter und bis zur Durchführung der Reparatur können Kabel mit kunststoffisolierten Adern oder mit Lichtwellenleitern bereits über lange Strecken durch Feuchtigkeit geschädigt sein, so daß hohe Reparaturkosten durch Auswechseln von größeren Kabellängen entstehen. Bei Kabeln mit Lichtwellenleitern kann ein Wassereinbruch ebenfalls zu einer Verschlechterung der Übertragungseigenschaften, und zu einer Überflutung der Muffen führen. Um diese Nachteile zu verringern, ist man dazu übergegangen, Kabel mit einer vaselineähnlichen Masse wie Petrolat zu füllen. Diese in die Hohlräume der Kabelseele eingebrachten Füllmittel gewährleisten einen vorzüglichen Schutz gegen das Eindringen von Wasserdampf und Wasser insbesondere gegen deren Längsausbreitung. Die Füllmittel können stopfenartig eingebracht werden (diskontinuierliche Stopfung) oder über die gesamte Länge (kontinuierlich gefüllte Kabel).

Bei kontinuierlich gefüllten Kabeln kann es vorkommen, daß insbesondere bei höherpaarigen Kabeln die Zwischenräume nicht 100%ig ausgefüllt werden. Darüberhinaus können zwischen Kabelseele und dem Aluminiumband Hohlräume oder kleine Kanäle bestehen bleiben, in denen sich das Wasser partiell frei ausbreiten kann. Man muß also davon ausgehen, daß bei einer Beschädigung des Außenmantels zwar kurzfristig eine Ausbreitung des Wassers verhindert wird, aber über einen längeren Zeitraum kann sich unter Druck auf die Kabelseele einwirkendes Wasser in Längsrichtung des Kabels ausbreiten. Es wäre daher wünschenswert, wenn ein solcher Schaden frühzeitig bemerkt wird, so daß dann Maßnahmen ergriffen werden können, den Schaden gering zu halten. Die Verwendung von in herkömmlichen Fernmeldekabeln eingesetzten Prüfleitern ist nicht möglich, da die Prüfleiter bei kontinuierlich gestopften Kabeln vollständig in der wasserabweisenden Masse eingebettet und somit funktionslos wären.

Die diskontinuierliche Stopfung ermöglicht zwar den Einsatz von Prüfleitern, ist aber in der Fertigung sehr aufwendig und erfordert Spezialmaschinen für die Stopfung der Kabelseele.

Aus der DE-A 27 24 795 ist ein längswasserdichtes Fernmeldekabel mit geschirmten Verseilelementen aus mindestens zwei von einer Schirmung aus leitfähigem Band umgebenen kunststoffisolierten Adern bekannt. Die Hohlräume des Fernmeldekabels sind kontinuierlich mit einem Stopfmedium gefüllt. Die Adern sind gemeinsam von einem Netzband und einer auf das Netzband aufgebrachten Schirmung aus leitfähigem Band umgeben. Damit beim Stopfprozeß das Stopfmedium auch die Hohlräume im Innern der Verseilelemente ausfüllen kann, weist die Schirmung Durchtrittsöffnungen auf. Zwischen dem Netzband und der Schirmung kann ein Beidraht angeordnet sein, der den Anschluß der Schirmung an Endeinrichtungen erleichtern soll. Eine Überwachung bzw. Überprüfung dieses Kabels auf Wassereinbruch ist nicht vorgesehen.

Aus der den Oberbegriff des Anspruchs 1 bildenden GB-A-2 164 198 ist ein Nachrichtenkabel aus mehreren die Kabelseele bildenden Adern bekannt, bei welchem die Kabelseele von einem Mantel umgeben ist, welcher aus einem Innenmantel aus Kunststoff einer Metallfolie und einem Kunststoffaußenmantel besteht. Bei der Herstellung werden die Adern zur Seele verseilt. Die Seele wird kontinuierlich gefüllt, indem sie durch ein Bad mit flüssigem Stopfmittel geführt wird, wobei das Stopfmittel die Zwischenräume zwischen den Adern ausfüllt. Die Seele wird dann durch ein Bad aus bei Wasserzutritt quellendem Material geführt, in welchem Pulverpartikel sich auf der durch das Stopfmittel klebrigen Oberfläche der Seele ablagern. Eine Möglichkeit der Überwachung des Kabels ist nicht vorgesehen.

Der Erfindung liegt von daher die Aufgabe zugrunde, eine Möglichkeit anzugeben, kontinuierlich gestopfte Nachrichtenkabel überwachbar zu machen, ohne die Längswasserdichtigkeit zu verringern.

Diese Aufgabe wird bei einem Nachrichtenkabel der eingangs erwähnten Art durch die Kombination der folgenden Merkmale gelöst:
a) das Band ist derart auf die Kabelseele zu einer Bandlage aufgebracht, daß periodisch ein Längsbereich mit vollständiger Bedeckung der Kabelseele und ein Längsbereich mit unvollständiger Bedeckung der Kabelseele aufeinander folgen.
b) auf die Bandlage ist zumindest ein vorzugsweise wendelartig verlaufender Prüfleiter aufgebracht.

Durch die Überdeckung der Kabelseele mit dem Band wird zwischen dem Band und dem Metallband des Außenmantels ein von Füllmasse freier Ringspalt geschaffen, über dessen Länge der Prüfleiter frei d. h. nicht in Petrolat eingebettet liegt und somit eingedrungene Feuchtigkeit melden kann. In den Bereichen unvollständiger Bedeckung befindet sich das Metallband in direktem Kontakt mit dem Petrolat bzw. Petrojelly, der Prüfleiter ist vollständig in der Masse eingebettet, und die Kabelseele ist vollständig abgedichtet.

Durch die Erfindung wird also ein Nachrichtenkabel geschaffen, welches innerhalb seiner Kabelseele kontinuierlich und zwischen dem Band und dem Metallband diskontinuierlich gefüllt ist. Der zwischen dem Band und dem Metallband aufgeseilte Prüfleiter ist ein aus der Kabeltechnik an sich bekannter Prüfleiter, mit dem bei entsprechender Schaltung Feuchtigkeit durch Isolationsminderung gemeldet, und der Ort des Feuchtigkeitseinbruchs geortet werden kann.

Nach einer besonders vorteilhaften Ausgestaltung der Erfindung ist das Band in Abständen durchlöchert bzw. mit Längsschlitzen versehen. Die Löcher bzw. Längsschlitze müssen so ausgebildet sein, daß ein nahezu ungehinderter Durchtritt der Masse möglich ist.

Mit besonderem Vorteil verläuft das Band in Längsrichtung des Kabels.

Über dem Band und dem/den Prüfleiter(n) ist eine vorzugsweise in Längsrichtung des Kabels verlaufende Lage Kreppapier angeordnet. Das Kreppapier dient als Polsterschicht für den Mantel des Kabels und als thermische Barriere für die empfindliche Kabelseele. Aufgrund seiner Saugfähigkeit kann es Masse aufnehmen, und einer Abdichtung des Ringspaltes zwischen Kabelseele und Metallband förderlich sein.

Sinnvoll kann es auch sein, direkt auf die gefüllte Kabelseele zwischen der Kabelseele und der Bandlage eine in Längsrichtung des Kabels verlaufende Lage Kreppapier vorzusehen, und eine dünne Schicht Füllmasse darauf anzuordnen. Das Kreppapier dient dabei als Form für die Füllmasse während die dünne auf dem Kreppapier angeordnete Schicht die diskontinuierliche Abstopfung des Ringspaltes gewährleisten soll.

Der/die Prüfleiter bestehen zweckmäßiger Weise aus einem Metalldraht ohne Isolierung oder mit einer perforierten Kunststoffisolierung oder mit einer Papierisolierung. Die Prüfleiter sind zweckmäßigerweise mit Abstand zueinander versetzt auf der Kabelseele angeordnet. Zusätzlich können auch vollständig isolierte, lackierte oder emaillierte Leiter zu Meßzwecken verwendet werden. Diese Technik ist bei nicht gestopften Nachrichtenkabeln auch bezüglich des Einmessens von Fehlerstellen erprobt.

Auf einen gesonderten Prüfleiter kann verzichtet werden, wenn, wie es nach einem weiteren Gedanken der Erfindung vorgesehen ist, das Band aus Kunststoff ist und der Prüfleiter eine metallische Beschichtung auf dem Kunststoffband ist. Die metallische Beschichtung des Kunststoffbandes weist nach außen. Zwischen der Metallschicht bzw. der Metallfolie und dem Metallband, das in diesem Fall zur Kabelseele hin blank sein muß, ist mindestens eine Lage Kreppapier vorgesehen, die im Normalfall als Isolator wirkt und bei Anwesenheit von Feuchtigkeit Metallschicht und Metallband elektrisch leitend verbindet und eine Fehlermeldung ermöglicht. Da bei dieser Vorgehensweise eine Fehlerstelle nur grob eingemessen werden kann, ist eine zusätzliche Anordnung von Prüfleitern sinnvoll. Die Anordnung von Metallfolie und Prüfleiter ermöglicht eine große Kontaktfläche für eine sichere Alarmmeldung und eine genaue Einmessung über Runddrähte.

Die Erfindung betrifft ebenfalls ein Verfahren zur Herstellung solcher Nachrichtenkabel, welches sich vom herkömmlichen Verfahren durch den zusätzlichen Arbeitsgang für das Aufbringen des Kunststoffbandes und das Aufseilen des Prüfleiters unterscheidet.

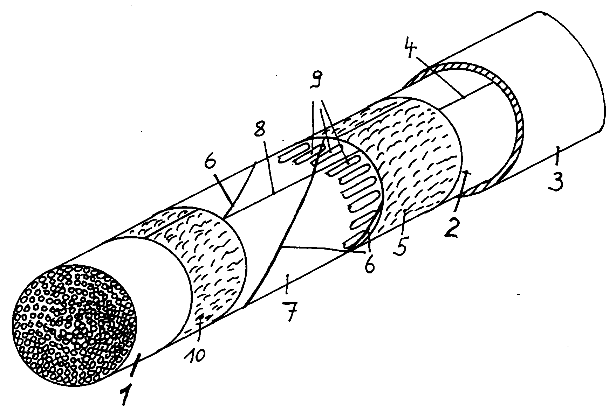

Die Erfindung ist an Hand des in der Figur schematisch dargestellten Ausführungsbeispiels näher erläutert.

Mit 1 ist die Kabelseele bezeichnet, die aus einer Vielzahl von miteinander verseilten kunststoffisolierten Adern oder Lichtwellenleitern aufgebaut ist. Nach dem Verseilvorgang ist mittels einer bekannten nicht dargestellten Vorrichtung eine wasserabweisende Masse z. B. auf der Basis von Silikon, Polyisobuthylen oder Vaseline, in der Kabeltechnik als Petrolat bezeichnet, unter hohem Druck eingepreßt. Für diesen Vorgang kann das Kabel und/oder die Füllmasse erwärmt werden. Die auf diese Weise kontinuierlich gestopfte Kabelseele 1 ist von einem Kabelmantel umhüllt, der aus einem Metallband 2 und einem extrudierten Kunststoffmantel 3 besteht. Das Metallband 2 ist üblicherweise ein copolymerbeschichtetes Aluminiumband, dessen überlappende Bandkanten 4 durch die Extrusionswärme miteinander verklebt bzw. verschweißt werden. Unter dem Metallband 2 liegt ein Kreppapierband 5, welches als Wärmeschutz für die Kabelseele 1 und als Einhüllende für die Masse dient.

Um ein solches bekanntes kontinuierlich gestopftes vielpaariges Nachrichtenkabel mit Schichtenmantel überwachbar zu machen, d. h. daß bei einem solchen Kabel eingedrungenes Wasser oder Feuchtigkeit nach sehr kurzer Zeit gemeldet und geortet werden kann, sind Prüfleiter 6 vorgesehen, die um die Kabelseele 1 verseilt sind. Die Prüfleiter 6 bestehen in an sich bekannter Weise aus einem Metalldraht mit einer perforierten Kunststoffisolierung bzw. einer Papierisolierung oder aus blanken Drähten. Nach der Verlegung liegt zwischen den Prüfleitern 6 oder dem Metallband 2 eine Potentialdifferenz. Bei Anwesenheit von Feuchtigkeit verringert sich der Widerstand der Prüfleiterisolierung und der Schaden kann gemeldet werden. Durch geeignete bekannte Schaltungen kann der Schadensfehler geortet werden. Der Fehler kann dann entweder repariert werden oder aber die beschädigte Kabellänge wird ausgewechselt.

Zwischen den Prüfleitern 6 und der Kabelseele 1 ist ein Kunststoffband 7 mit überlappenden längsverlaufenden Bandkanten 8 vorgesehen, welches in vorbestimmten Abständen durchlöchert ist bzw. Längsschlitze 9 aufweist. Das Kunststoffband 7 schützt die Prüfleiter davor, daß sie mit der wasserabweisenden Masse in Berührung gelangen, wodurch diese ihre Funktionsfähigkeit verlieren würden. Das Fehlen der wasserabweisenden Masse zwischen dem Kunststoffband 7 und dem Metallband 2 schafft einen nicht abgedichteten Ringspalt, der eine unbegrenzte Längsausbreitung von eingedrungenem Wasser gestatten würde. Um das zu verhindern, sind die Durchbrechungen 9 vorgesehen, durch welche Masse austreten und den Ringspalt abdichten kann, so daß in gleichmäßigen Abständen Stopfstellen entstehen.

Mit 10 ist noch eine Kreppapierlage bezeichnet, die die Kabelseele 1 umhüllt. Auf diese Kreppapierlage 10 kann noch eine nicht näher bezeichnete dünne Schicht Masse aufgebracht sein.

Auf den Prüfleiter 6 kann verzichtet werden, wenn das Kunststoffband 7 eine nicht näher bezeichnete metallische Beschichtung an der Außenseite aufweist. Die Potentialdifferenz liegt dann zwischen der Metallschicht des Bandes 7 und dem Metallband 2. Die isolierende Schicht zwischen der Metallschicht und dem Metallband 2 wird durch das Kreppapier 5 gebildet, welches bei Anwesenheit von Feuchtigkeit seine isolierende Wirkung verliert.

Werden beide Varianten zusammen eingesetzt, so können zwischen den beiden Metallbändern geringe Feuchtigkeitsmengen für eine Alarmmeldung genutzt werden, während die genaue Ortung der Fehlerstellen über die Prüfleiter (mit definiertem Widerstand) durchgeführt wird.

## Patentansprüche

1. Nachrichtenkabel mit die Kabelseele (1) bildenden kunststoffisolierten Adern und/oder Lichtwellenleitern sowie einem Kabelmantel (2,3), wobei die Hohlräume in der Kabelseele (1) durch eine die Ausbreitung von Wasser verhindernde Füllmasse wie z. B. Petrolat, über die gesamte Länge des Kabels ausgefüllt sind, und zwischen Kabelseele (1) und Kabelmantel (2,3) ein Band (7) aus einem für die Füllmasse undurchlässigen Material wie z. B. ein Kunststoffband vorgesehen ist, gekennzeichnet durch die Kombination folgender Merkmale:
a) das Band (7) ist derart auf die Kabelseele (1) zu einer Bandlage aufgebracht, daß Periodisch ein Längsbereich mit vollständiger Bedeckung der Kabelseele (1) und ein Längsbereich mit unvollständiger Bedeckung der Kabelseele (1) aufeinander folgen;
b) auf die Bandlage ist zumindest ein vorzugsweise wendelartig verlaufender Prüfleiter (6) aufgebracht.

2. Nachrichtenkabel nach Anspruch 1, daduch gekennzeichnet, daß das Band (7) in Abständen durchlöchert ist bzw. mit Längsschlitzen (9) versehen ist.

3. Nachrichtenkabel nach Anspruch 1 oder 2, dadurch gekennzeichnet, daß das Band (7) in Längsrichtung des Kabels verläuft.

4. Nachrichtenkabel nach einem der Ansprüche 1 bis 3, dadurch gekennzeichnet, daß über dem Band (7) und dem/den Prüfleiter(n) (6) eine Lage Kreppapier (5) vorzugsweise in Längsrichtung des Kabels verlaufend angeordnet ist.

5. Nachrichtenkabel nach einem der Ansprüche 1 bis 4, dadurch gekennzeichnet, daß auf die Kabelseele (1) zwischen der Kabelseele (1) und der Bandlage eine in Längsrichtung des Kabels verlaufende Kreppapierlage (10) und darüber eine dünne Schicht von Petrolat bzw. Petrojelly aufgebracht ist.

6. Nachrichtenkabel nach einem der Ansprüche 1 bis 5, dadurch gekennzeichnet, daß der/die Prüfleiter (6) aus einem metallischen Draht mit einer perforierten Kunststoffisolierung oder einer Papierisolierung und/oder einem blanken Metalldraht besteht(en).

7. Nachrichtenkabel nach einem der Ansprüche 1 bis 6, dadurch gekennzeichnet, daß das Band (7) aus Kunststoff ist und der Prüfleiter (6) eine metallische Beschichtung auf dem Kunststoffband (7) ist.

8. Verfahren zur Herstellung eines Nachrichtenkabels nach einem der Ansprüche 1,2,3,6 und 7, bei dem die verseilte Kabelseele (1) mit einer wasserabweisenden Masse kontinuierlich gefüllt wird, auf die gefüllte Kabelseele (1) eine Bandlage aus Kunststoffband (7) und darüber der Kabelmantel (2,3) aufgebracht wird, dadurch gekennzeichnet, daß das Kunststoffband (7) mit periodisch wiederkehrenden Längsbereichen unvollständiger Bedeckung aufgebracht und anschließend zumindest ein Prüfleiter (6) auf die Bandlage aufgeseilt wird.

9. Verfahren nach Anspruch 8, dadurch gekennzeichnet, daß das Kunststoffband (7) in bestimmtem Abstand mit Durchbrechungen versehen wird, daß das Kunststoffband (7) längseinlaufend um die Kabelseele (1) herumgelegt wird, daß nach dem Aufseilen des Prüfleiters (6) ein Kreppapierband (5) längseinlaufend um die Kabelseele (1) herumgeformt wird, daß als Kabelmantel (2,3) ein Metallband (2) längseinlaufend um die Kabelseele (1) herum zu einem Rohr mit überlappenden Bandkanten (4) geformt wird und die Bandkanten (4) verschlossen werden und abschließend eine Kunststoffschicht (3) auf das zum Rohr geformte Metallband (2) aufextrudiert wird.

10. Verfahren nach Anspruch 9, dadurch gekennzeichnet, daß an Stelle des Kunststoffbandes (7) eine kunststoffbeschichtete Metallfolie oder ein metallisiertes Kunststoffband verwendet wird, wobei die Metallschicht nach außen weist und durch die Kreppapierlage (5) elektrisch gegenüber dem Metallband (2) isoliert wird.

## Claims

1. Communication cable having plastic-insulated conductors and/or optical waveguides forming the cable core (1) and a cable sheathing (2, 3), in which the cavities in the cable core (1) are filled over the entire length of the cable by a filling mass, such as for example petrolatum, which prevents the diffusion of water, and between cable core (1) and cable sheathing (2, 3) a tape (7) of a material impervious to the filling mass, such as for example a plastic tape, is provided, characterized by the combination of the following features:
a) the tape (7) is applied to the cable core (1) to form a tape layer in such a manner that periodically a longitudinal region with complete covering of the cable core (1) and a longitudinal region with incomplete covering of the cable core (1) follow one another;
b) at least one test conductor (6), preferably extending helically, is applied to the tape layer.

2. Communication cable according to Claim 1, characterized in that the tape (7) is perforated at intervals or is provided with longitudinal slots (9).

3. Communication cable according to Claim 1 or 2, characterized in that the tape (7) extends in the longitudinal direction of the cable.

4. Communication cable according to one of Claims 1 to 3, characterized in that over the tape (7) and the test conductor(s) (6) a layer of crepe paper (5) is disposed to extend preferably in the longitudinal direction of the cable.

5. Communication cable according to one of Claims 1 to 4, characterized in that onto the cable core (1) between the cable core (1) and the tape layer there is applied a crepe paper layer (10) extending in the longitudinal direction of the cable and, over the same, a thin layer of petrolatum or petroleum jelly.

6. Communication cable according to one of Claims 1 to 5, characterized in that the test conductor or test conductors (6) comprise(s) a metal wire with a perforated plastic insulation or a paper insulation and/or a bare metal wire.

7. Communication cable according to one of Claims 1 to 6, characterized in that the tape (7) is of plastic and the test conductor (6) is a metal coating on the plastic tape (7).

8. Process for the production of a communication cable according to one of Claims 1, 2, 3, 6 and 7, in which process the stranded cable core (1) is continuously filled with a water-repellent mass, onto the filled cable core (1) there is applied a tape layer of plastic tape (7) and, over the same, the cable sheathing (2, 3), characterized in that the plastic tape (7) is applied with periodically recurrent longitudinal regions of incomplete covering and subsequently at least one test conductor (6) is stranded onto the tape layer.

9. Process according to Claim 8, characterized in that the plastic tape (7) is provided with perforations at specified intervals, in that the plastic tape (7) is laid around the cable core (1) running in longitudinally, in that after the stranding-on of the test conductor (6) a crepe paper tape (5) is shaped around the cable core (1) running in longitudinally, in that as cable sheathing (2, 3) a metal band (2) is shaped around the cable core (1), running in longitudinally, to form a tube with overlapping band edges (4) and the band edges (4) are sealed and subsequently a plastic layer (3) is extruded onto the metal band (2) formed into the tube.

10. Process according to Claim 9, characterized in that in place of the plastic tape (7) a plastic-coated metal foil or a metallized plastic tape is used, in which case the metal layer points outwards and is electrically insulated in relation to the metal band (2) by the crepe paper layer (5).

## Revendications

1. Câble de télécommunication avec des brins isolés par du plastique et/ou des conducteurs d'ondes lumineuses constituant l'âme du câble (1) et une gaine de câble (2, 3), dans lequel les vides à l'intérieur de l'âme (1) sont remplis sur toute la longueur du câble d'une masse de remplissage empêchant la propagation de l'eau, par exemple de la graisse verte et qui comporte entre l'âme (1) et la gaine (2, 3) une bande (7) en matériau imperméable à la masse de remplissage par exemple une bande en plastique **caractérisé** par la combinaison des caractéristiques suivantes :
a) la bande (7) est disposée en une couche sur l'âme (1) telle qu'il y a une succession périodique d'une zone couvrant complétement l'âme (1) et d'une zone couvrant imparfaitement l'âme (1) ;
b) sur la couche de la bande est disposé au moins un conducteur de test (6) de préférence en hélice.

2. Câble de télécommunication selon la revendication 1, **caractérisé en ce que** la bande (7) est trouée par intervalle ou est munie de fentes longitudinales (9).

3. Câble de télécommunication selon l'une des revendications 1 ou 2, **caractérisé en ce que** la bande (7) est disposée dans le sens longitudinal du câble.

4. Câble de télécommunication selon l'une des revendications 1 à 3, **caractérisé en ce que** sur la bande (7) et sur le ou les conducteurs de test (6) est disposé une couche de papier crèpe (5) allant de préférence dans le sens longitudinal du câble.

5. Câble de télécommunication selon l'une des revendications 1 à 3, **caractérisé en ce que** sur l'âme (1), entre l'âme (1) et la couche de bande, est disposée une couche de papier crêpe (10) allant dans le sens longitudinal du câble et par-dessus, une fine couche de graisse verte ou de vaseline.

6. Câble de télécommunication selon l'une des revendications 1 à 5, **caractérisé en ce que** le ou les conducteurs de test (6) est/ou sont constitué(s) d'un fil métallique avec une isolation plastique perforée ou une isolation en papier et/ou d'un fil métallique nu.

7. Câble de télécommunication selon l'une des revendications 1 à 6, **caractérisé en ce que** la bande (7) est en plastique et le conducteur de test (6) est une couche métallique sur une bande plastique (7).

8. Procédé pour fabriquer un câble de télécommunication selon l'une des revendications 1, 2, 3, 6 ou 7, dans lequel l'âme toronnée (1) est remplie en continu d'une masse repoussant l'eau, et dans lequel sur l'âme remplie (1) est déposé une couche de bande en bande plastique (7) et par-dessus une gaine (2, 3), **caractérisé en ce que** la bande plastique (7), est disposée avec un recouvrement incomplet dans des zones longitudinales alternées périodiquement et ensuite au moins un conducteur de test (6) est câblé sur une couche de bande.

9. Procédé selon la revendication 8, **caractérisé en ce que** la bande plastique (7) a des intervalles déterminés est pourvue de découpures, que la bande plastique (7) est enroulée dans le sens longitudinal autour de l'âme (1), que après le câblage du conducteur test (6) une bande de papier crèpe (5) est appliqué longitudinalement autour de l'âme (1), qu'une bande métallique (2) formant la gaine (2, 3) est appliqué autour de l'âme pour former un tube avec des bords (4) se recouvrant et les bords de la bande (4) sont verrouillés et ensuite une couche plastique (3) est extrudée sur la bande métallique (2) formant le tube.

10. Procédé selon la revendication 9, **caractérisé en ce que**, à la place de la bande plastique (7) on utilise une feuille métallique couverte de plastique ou une bande plastique métallisée, dans lequel la couche de métal est vers l'extérieur et est isolée électriquement de la bande métallique (2) par une couche de papier crêpe (5).
